# EUROPEAN PATENT APPLICATION

(11) **EP 2 346 024 A1**
(43) Date of publication of application: **20.07.2011**
(21) Application number: 09824671.3
(22) Date of filing: 16.09.2009
(51) Int. Cl.: G09G 3/36, G02F 1/133, G09F 9/30, G09F 9/35, G09G 3/20

(54) **DISPLAY APPARATUS**

(30) Priority: 10.11.2008 JP 2008288157
(71) Applicant: Sharp Kabushiki Kaisha, Osaka-shi, Osaka 545-8522 (JP)
(72) Inventor: Yoshino, Naoki, Osaka 545-8522 (JP); Itoh, Motomitsu, Osaka 545-8522 (JP)
(74) Representative: Goddar, Heinz J.
(86) International application number: PCT/JP2009/066149
(87) International publication number: WO 2010/052971

(57) **Abstract**

A liquid crystal display apparatus (display apparatus) (1) provided with a liquid crystal panel (display unit) (2) for displaying information includes a source driver (data wiring drive unit) (23) having an amplifier output unit (33) for outputting to each of a plurality of source wirings (Sm to S(m+m)) a source signal (data signal) according to information to be displayed on the liquid crystal panel (2), a redundant wiring (Y) provided as a backup wiring for the source wirings (S), and a redundant amplifier (36) capable of outputting to the redundant wiring (Y) a source signal according to information to be displayed on the liquid crystal panel (2), the redundant amplifier (36) outputting to the redundant wiring (Y) and a source wiring (Sm) to which to the redundant wiring (Y) is connected a corresponding source signal at a timing earlier than the amplifier output unit (33) by a prescribed amount of time.

## Description

### Technical Field

The present invention relates to a display apparatus provided with a display unit for displaying information such as characters and images, and more particularly to a display apparatus having a plurality of data wirings, to which data signals according to the information are input, and a redundant wiring thereof.

### Background Art

In recent years, liquid crystal display apparatuses, for example, have been widely used in liquid crystal display televisions, monitors, mobile telephones and the like as flat panel displays characterized by being low profile and lightweight in comparison with existing cathode-ray tubes. Such liquid crystal display apparatuses are provided with a liquid crystal panel serving as a display unit for displaying information such as characters and images, and in this liquid crystal panel are provided a plurality of data wirings (source wirings) and a plurality of scan wirings (gate wirings) arrayed in a matrix, and a plurality of pixels having switching elements such as thin film transistors (TFTs) in proximity to the intersections between the data wirings and the scan wirings.

Also, in a conventional liquid crystal display apparatus, an output amplifier that is connected to one end of each of the plurality of source wirings and that outputs a source signal (data signal) according to information to be displayed to each source wiring, and an backup output amplifier, which is a redundant amplifier provided as backup for the output amplifier, are provided in a source driver, as disclosed in a below described Patent Document 1. This backup output amplifier is constituted using an operational amplifier, with a normal-phase input terminal and an output terminal thereof respectively being connected to a first backup wiring and a second backup wiring. Also, with this conventional liquid crystal display apparatus, an external circuit provided outside the source driver is connected between a reverse-phase input terminal and an output terminal of the backup output amplifier.

Specifically, the external circuit is provided with a parallel circuit of a resistor and a capacitor, which are connected between the reverse-phase input terminal of the backup output amplifier and GND, as a reverse-phase input circuit of the backup output amplifier, and a resistor connected between the output terminal and the reverse-phase input terminal of the backup output amplifier as a feedback circuit from the output to the reverse-phase input of the backup output amplifier.

Also, with this conventional liquid crystal display apparatus, when a disconnection occurs on one of the source wirings, the output of the output amplifier connected to that source wiring is connected to the first backup wiring, and the opposite end of the source wiring to the source driver end is connected to the second backup wiring. With this conventional liquid crystal display apparatus, the section of the disconnected source wiring from the output amplifier to the disconnection point and pixels connected thereto are thereby charged using the output from the output amplifier. On the other hand, the section from the opposite end to the source driver end that is connected to the second backup wiring to the disconnection point and pixels connected thereto are charged using the output from the backup output amplifier.

Further, with this conventional liquid crystal display apparatus, it is disclosed that the section from the disconnection point to the connection point between the source wiring and the first backup wiring and the section from the disconnection point to the connection point between the source wiring and the second backup wiring can be charged to substantially the same voltage at the end of a signal supply period to the disconnected source wiring, by suitably selecting the resistance values (element constants) of the two resistors included in the external circuit. With this conventional liquid crystal display apparatus, it is also disclosed that even when a disconnection occurs on a source wiring, a drop in display quality can be prevented by avoiding undercharging on that source wiring.

### Citation List

### Patent Literature

Patent Literature 1: WO 08/075480 (2008)

### Disclosure of the Invention

### Problem to be Solved by the Invention

However, with a conventional liquid crystal display apparatus such as the above, because the external circuit is provided outside the source driver (data wiring drive unit), the problem of the circuit structure becoming complex and increasing in size arises. Also, with this conventional liquid crystal display apparatus, when a disconnection occurs on a source wiring (data wiring), the resistance values of the two resistors in the external circuit need to be changed according to the location of the disconnection point, the length of the signal supply period of the source signal (data signal) and the like, requiring time and effort to prevent a drop in display quality

Further, with the above conventional liquid crystal display apparatus, because first and second backup wirings (redundant wirings) are provided, it may not be possible to prevent the circuit structure becoming complex and increasing in size. Also, when a disconnection occurs on a source wiring, that source wiring needs to be connected at the two locations of the first and second backup wirings, requiring time and effort to make these connections.

The present invention has been made in consideration of the above issues, and has as its object to provide a structurally simple display apparatus that is able to easily prevent a drop in display quality even when a disconnection occurs on a data wiring.

### Means for Solving the Problem

In order to attain the above object, a display apparatus according to the present invention is provided with a display unit for displaying information, and includes a plurality of data wirings, a data wiring drive unit connected to one end of each of the plurality of data wirings, and having an amplifier output unit that outputs to each of the plurality of data wirings a data signal according to information to be displayed on the display unit, a redundant wiring provided as a backup wiring for the data wirings, and a redundant amplifier connected to one end of the redundant wiring and capable of outputting to the redundant wiring a data signal according to information to be displayed on the display unit, the redundant amplifier outputting to the redundant wiring and a data wiring to which to the redundant wiring is connected a corresponding data signal at a timing earlier than the amplifier output unit by a prescribed amount of time.

With the display apparatus constituted as described above, a redundant amplifier connected to one end of a redundant wiring and capable of outputting a data signal is provided, so that even when a disconnection occurs on a data wiring, undercharging on that data wiring can be prevented, without providing two redundant wirings. Also, by connecting the redundant wiring at only one place with respect to the data wiring that has suffered a disconnection, undercharging on that data wiring can be prevented Further, because the redundant amplifier outputs a corresponding data signal to the redundant wiring and the data wiring to which to the redundant wiring is connected at a timing earlier than the amplifier output unit by a prescribed amount of time, the section from the amplifier output unit to the disconnection point of the data wiring and the section from the redundant amplifier to the disconnection point on the data wiring via the redundant wiring can be charged to substantially the same voltage at the end of a signal supply period of the data signal. Accordingly, a display apparatus can be constituted that, unlike the above conventional example, is structurally simple and able to easily prevent a drop in display quality even when a disconnection occurs on a data wiring.

Also, with the above display apparatus, preferably the redundant amplifier is integrally provided in the data wiring drive unit.

In this case, the circuit structure of the display apparatus can be easily compacted, in comparison with the case where the data wiring drive unit and the redundant amplifier are provided separately.

Also, with the above display apparatus, preferably the data wiring drive unit is provided with a storage unit that stores a data signal input from outside, and a selection unit that is provided between the storage unit and the redundant amplifier, and selectively outputs on the redundant amplifier side only the corresponding data signal for the data wiring to which to the redundant wiring is connected.

In this case, the circuit size of the data wiring drive unit can be reduced.

Also, with the above display apparatus, preferably a value of the prescribed amount of time, in a case where a disconnection occurs on a data wiring and the redundant wiring is connected to the data wiring, is determined using a resistance value of wiring from the amplifier output unit to a disconnection point of the data wiring and a resistance value of wiring from the redundant amplifier to the disconnection point of the data wiring via the redundant wiring.

In this case, the section of the data wiring to which to the redundant wiring is connected from the amplifier output unit to the disconnection point of the data wiring and the section from the redundant amplifier to the disconnection point of the data wiring via the redundant wiring can be reliably charged to substantially the same voltage at the end of the signal supply period of the data signal. As a result, even when a disconnection occurs on a data wiring, a drop in display quality can be reliably prevented by avoiding undercharging on that data wiring.

Also, with the above display apparatus, an effective display area may be set in the display unit, the plurality of data wirings may be provided at least inside the effective display area, and the redundant wiring may be provided outside the effective display area.

In this case, because the redundant wiring is provided outside the effective display area, display quality in the effective display area can be easily improved.

Also, with the above display apparatus, a liquid crystal panel provided with a pair of transparent substrates and a liquid crystal layer that is sandwiched by the pair of the transparent substrates may be used for the display unit.

In this case, a liquid crystal display apparatus that is able to suitably operate a liquid crystal layer and in which a drop in display quality is prevented, even when a disconnection occurs on a data wiring, can be easily configured.

### Effects of the Invention

According to the present invention, a structurally simple display apparatus that is able to easily prevent a drop in display quality even when a disconnection occurs on a data wiring can be provided.

### Brief Description of Drawings

[FIG. 1] FIG. 1 is a schematic cross-sectional view illustrating a liquid crystal display apparatus according to a first embodiment of the present invention.
[FIG. 2] FIG. 2 illustrates a main configuration of a liquid crystal panel shown in FIG. 1.
[FIG. 3] FIG. 3 is a plan view showing printed circuit boards and flexible printed circuit boards shown in FIG. 1.
[FIG. 4] FIG. 4 illustrates a main configuration of a source driver.
[FIG. 5] FIG. 5 illustrates an operational example of a source driver.
[FIG. 6] FIG. 6 illustrates a main configuration of a source driver in a liquid crystal display apparatus according to a second embodiment of the present invention.

### Best Mode for Carrying Out the Invention

Hereinafter, preferred embodiments of a display apparatus of the present invention will be described with reference to the drawings. Note that in the following description, the case where the present invention is applied to a transmissive liquid crystal display apparatus will be illustrated as an example. Also, the dimensions of the constituent members in the drawings do not faithfully represent the dimensions of the actual members or the proportions of the members.

### [First Embodiment]

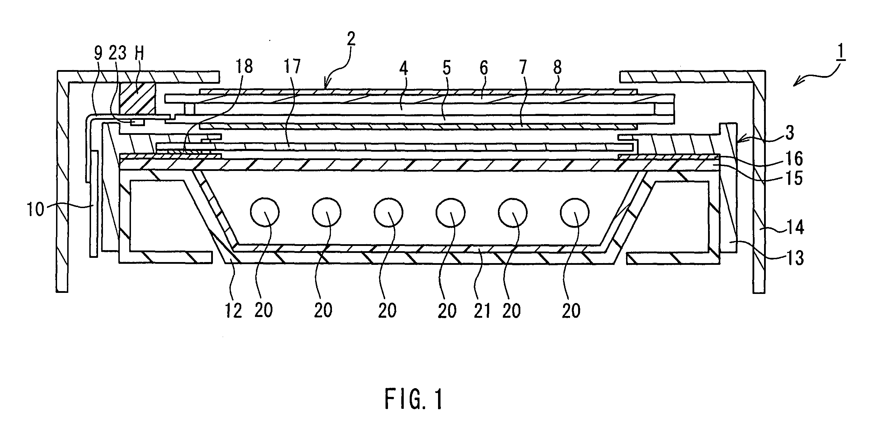

FIG. 1 is a schematic cross-sectional view illustrating a liquid crystal display apparatus according to a first embodiment of the present invention. In FIG. 1, a liquid crystal display apparatus 1 of the present embodiment has provided therein a liquid crystal panel 2 serving as a display unit installed with the upper side in the diagram being the viewing side (display surface side), and an illumination apparatus 3 that is disposed on the non-display side of the liquid crystal panel 2 (lower side in the diagram) and emits illumination light for illuminating the liquid crystal panel 2.

The liquid crystal panel 2 is provided with a liquid crystal layer 4, an active matrix substrate 5 and a color filter substrate 6 that serve as a pair of transparent substrates that sandwich the liquid crystal layer 4, and polarizing plates 7 and 8 that are respectively provided on the outer surfaces of the active matrix substrate 5 and the color filter substrate 6. Also, a flexible printed circuit board 9 and a printed circuit board 10 that is connected to the flexible printed circuit board 9 are provided in the liquid crystal panel 2. A plurality of flexible printed circuit boards 9 and printed circuit boards 10 are provided according to the number of source drivers 23 that are provided, as will be described in detail later.

The flexible printed circuit boards 9 are what are known as SOF (System On Film), and source drivers 23 serving as drivers for driving the liquid crystal layer 4 in pixel units are mounted on the flexible printed circuit boards 9. Note that with the flexible printed circuit boards 9, the surface (upper surface in FIG. 1) on the opposite side to the surface on which the source drivers 23 are installed abuts a heat dissipation sheet H constituted by synthetic resin, for example, and heat generated by the source drivers 23 is dissipated to the outside via the heat dissipation sheet H through a below-mentioned bezel.

Also, with the plurality of printed circuit boards 10, two adjacent printed circuit boards 10 are connected to each other by a flexible printed circuit board 28 (discussed in detail below). Further, a below-mentioned panel control unit is electrically connected to the printed circuit boards 10, and drive control of the source drivers 23 is performed by the panel control unit. With the liquid crystal panel 2, the polarization state of illumination light that is incident via the polarizing plate 7 is modulated by the liquid crystal layer 4 and the amount of light passing through the polarizing plate 8 is controlled to display a desired image.

Note that a liquid crystal mode and a pixel structure of the liquid crystal panel 2 are arbitrary. A drive mode of the liquid crystal panel 2 is also arbitrary. That is, an arbitrary liquid crystal panel that is able to display information can be used as the liquid crystal panel 2. Hence, a detailed structure of the liquid crystal panel 2 is not shown in FIG. 1, and a description thereof is also omitted.

In the illumination apparatus 3, a bottomed chassis 12 that is open on the upper side in the diagram (liquid crystal panel 2 side) and a frame 13 that is installed on the liquid crystal panel 2 side of the chassis 12 are provided. The chassis 12 and the frame 13 are constituted by a metal or a synthetic resin, and are sandwiched by a bezel 14 that has an L-shaped cross-section, in a state where the liquid crystal panel 2 is installed above the frame 13. Specifically, the chassis 12 is the casing of the illumination apparatus 3 which houses below-mentioned cold-cathode fluorescent tubes serving as light sources. The bezel 14 is for housing the liquid crystal panel 2, and is assembled to the frame 13 and the chassis 12, in a state where the liquid crystal panel 2 is sandwiched between the bezel 14 and the frame 13, which is also referred to as a plastic chassis. The illumination apparatus 3 is assembled to the liquid crystal panel 2, and is integrated as a transmissive liquid crystal display apparatus 1 in which illumination light from the illumination apparatus 3 is incident on the liquid crystal panel 2.

The illumination apparatus 3 is provided with a diffuser plate 15 installed so as to cover the opening of the chassis 12, an optical sheet 17 installed on the liquid crystal panel 2 side above the diffuser plate 15, and a reflective sheet 21 provided on the inner surface of the chassis 12. Also, with the illumination apparatus 3, a plurality of, for example, six cold-cathode fluorescent tubes 20 are provided inside the chassis 12 below the liquid crystal panel 2, and constitute a back-lit illumination apparatus 3. The illumination apparatus 3 is configured such that light from the cold-cathode fluorescent tubes 20 exits from a light-emitting surface of the illumination apparatus 3 disposed facing the liquid crystal panel 2 as the illumination light.

Note that while a configuration using a back-lit illumination apparatus 3 is described in the above description, the present embodiment is not limited thereto, and an edge-lit illumination apparatus having a light guide panel may also be used. Also, an illumination apparatus having a light source other than a cold-cathode fluorescent tube such as a hot-cathode fluorescent tube or an LED can also be used.

The diffuser plate 15 is constituted by a synthetic resin or a glass material that is about 2 mm thick and rectangular in shape, for example, and diffuses light from the cold-cathode fluorescent tubes 20 such that the light exits from the optical sheet 17 side. Also, the diffuser plate 15 is incorporated inside the illumination apparatus 3 with the four sides thereof placed on a frame-like surface provided on the upper side of the chassis 12, and in a state of being sandwiched by the surface of the chassis 12 and the inner surface of the frame 13 with an elastically deformable pressing member 16 interposed therebetween. Further, an approximately central portion of the diffuser plate 15 is supported by a transparent support member (not shown) installed inside the chassis 12, and bending of the diffuser plate 15 into the chassis 12 is prevented.

The diffuser plate 15 is movably held between the chassis 12 and the pressing member 16, and even when deformation resulting from expansion and contraction (plastic deformation) occurs in the diffuser plate 15 due to the influence of heat such as heat produced by the cold-cathode fluorescent tubes 20 or a rise in temperature inside the chassis 12, a drop in the diffusivity of light from the cold-cathode fluorescent tubes 20 is prevented to the maximum extent possible as a result of the plastic deformation being absorbed by the pressing member 16 elastically deforming. Also, the case of using a diffuser plate 15 made of a glass material that is heat resistant in comparison with synthetic resin is preferable in terms of inhibiting yellow discoloration, heat deformation and the like as well as warpage due the above-mentioned influence of heat.

The optical sheet 17 includes a condenser sheet constituted by a synthetic resin film of about 0.5 mm in thickness, for example, and is configured to raise the luminance of the illumination light on the liquid crystal panel 2. Also, the optical sheet 17 is configured such that known optical sheet materials such as a prism sheet, a diffuser sheet and a polarizing sheet for improving the display quality on the display surface of the liquid crystal panel 2 or the like are appropriately laminated as necessary. The optical sheet 17 is configured to convert light exiting from the diffuser plate 15 to planar light having a uniform luminance that is greater than or equal to a prescribed luminance (e.g., 10000 cd/m²), and cause the planar light to be incident on the liquid crystal panel 2 side as illumination light. Note that in addition to the above description, an optical member such as a diffuser sheet for adjusting the viewing angle of the liquid crystal panel 2 may be appropriately laminated above (display surface side) the liquid crystal panel 2, for example.

Also, the optical sheet 17 has a protruding portion protruding on the left side of FIG. 1 that is formed in a central portion of the left side edge of FIG. 1, which is the upper side when the liquid crystal display apparatus 1 is in actual use, for example. Only the protruding portion of the optical sheet 17 is sandwiched by the inner surface of the frame 13 and the pressing member 16 with an elastic material 18 interposed therebetween, and the optical sheet 17 is incorporated in a state of being able to expand and contract inside the illumination apparatus 3. Thereby, even when expansion and contraction (plastic) deformation due to the above-mentioned influence of heat such as heat produced by the cold-cathode fluorescent tubes 20 occurs, the optical sheet 17 is able to freely expand and contract on the basis of the protruding portion, and the occurrence of creasing, bending or the like of the optical sheet 17 is prevented to the maximum extent possible. As a result, the liquid crystal display apparatus 1 is configured to be able to prevent the occurrence of a drop in display quality on the display surface of the liquid crystal panel 2, such as uneven luminance, caused by bending or the like of the optical sheet 17 to the maximum extent possible.

Straight fluorescent tubes are used for the cold-cathode fluorescent tubes 20, and electrode portions provided at both ends (not shown) thereof are supported outside the chassis 12. Also, narrow fluorescent tubes of about 3.0 to 4.0 mm in diameter and having excellent emission efficiency are used for the cold-cathode fluorescent tubes 20, and the cold-cathode fluorescent tubes 20 are held inside the chassis 12 in a state where the respective distances to the diffuser plate 15 and the reflective sheet 21 are maintained at a prescribed distance by unshown light source holders. Further, the cold-cathode fluorescent tubes 20 are disposed such that the longitudinal direction thereof is parallel with a direction orthogonal to the direction in which gravity acts. Thereby, with the cold-cathode fluorescent tubes 20, collection of mercury (vapor) sealed inside the tubes at one longitudinal end due to the action of gravity can be prevented, and lamp life is greatly improved.

The reflective sheet 21 is constituted by a thin film of a metal having high light reflectivity such as aluminum or silver about 0.2 to 0.5 mm thick, for example, and is configured to function as a reflector that reflects light from the cold-cathode fluorescent tubes 20 toward the diffuser plate 15. Thereby, with the illumination apparatus 3, light emitted from the cold-cathode fluorescent tubes 20 is efficiently reflected to the diffuser plate 15 side, and the use efficiency of the light and the luminance of the diffuser plate 15 can be enhanced. Note that in addition to the above description, instead of the metal thin film, it is also possible to use a synthetic resin reflective sheet material or to apply a white coating material or the like having high reflectivity to the inner surface of the chassis 12, for example, such that the inner surface functions as a reflector.

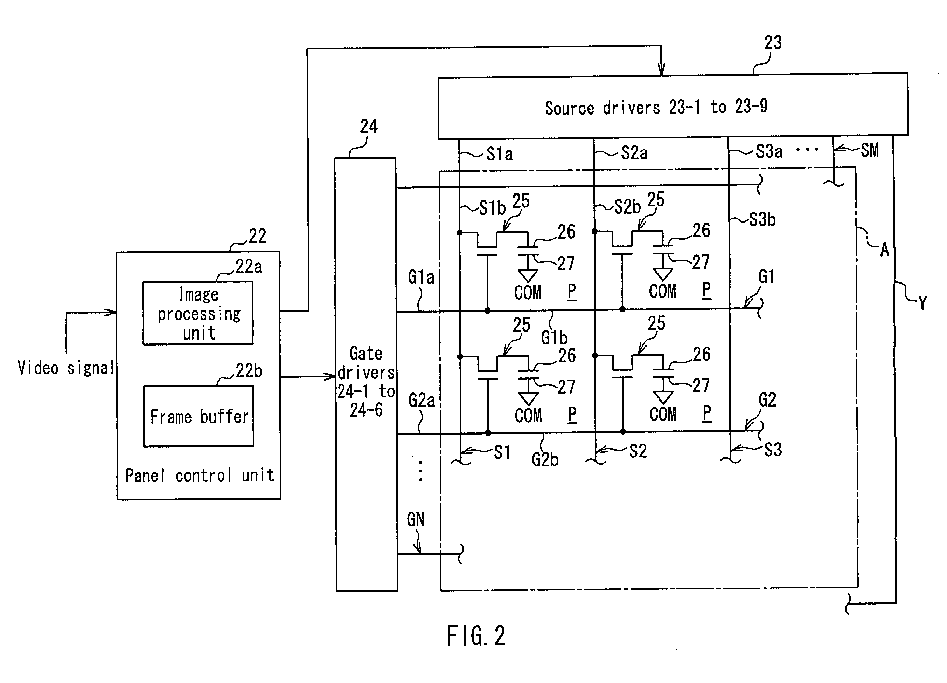

Next, the liquid crystal panel 2 will be described in detail with reference also to FIG. 2.

FIG. 2 illustrates a main configuration of the liquid crystal panel shown in FIG. 1.

In FIG. 2, the liquid crystal display apparatus 1 (FIG. 1) has provided therein a panel control unit 22 that performs drive control of the liquid crystal panel 2 (FIG. 1) serving as the above display unit for displaying information such as characters and images, a plurality of, for example, nine source drivers 23-1, 23-2,..., 23-8, 23-9 (hereinafter, collectively referred to as "source drivers 23") and a plurality of, for example, six gate drivers 24-1, 24-2, ..., 24-5, 24-6 (hereinafter, collectively referred to as "gate drivers 24") that operate based on an instruction signal from the panel control unit 22.

A video signal from outside the liquid crystal display apparatus 1 is input to the panel control unit 22. Also, the panel control unit 22 is provided with an image processing unit 22a that performs prescribed image processing on the input video signal and generates respective instruction signals for the source drivers 23 and the gate drivers 24, and a frame buffer 22b capable of storing one frame of display data included in the input video signal. As a result of the panel control unit 22 performing drive control on the source drivers 23 and the gate drivers 24 according to the input video signal, information according to the video signal is displayed on the liquid crystal panel 2.

The source drivers 23 are mounted on the flexible printed circuit boards 9, as mentioned above. Similarly, the gate drivers 24 are mounted on below-mentioned flexible printed circuit boards. Also, these source drivers 23 and gate drivers 24 are drive circuits for driving a plurality of pixels P provided in an effective display area A of the liquid crystal panel 2 in pixel units, and a plurality of source wirings S1 to SM (hereinafter, collectively referred to as source wirings S, where M is an integer greater than or equal to 9) and a plurality of gate wirings G1 to GN hereinafter, collectively referred to as gate wirings N, where N is an integer greater than or equal to 6) are respectively provided in the source drivers 23 and the gate drivers 24.

In other words, the source wirings (data wirings) S are connected to the source drivers 23, and the source drivers 23 constitute a data wiring drive unit that outputs a source signal (data signal) according to information to be displayed on the liquid crystal panel 2. On the other hand, the gate wirings (scan wirings) G are connected to the gate drivers 24, and the gate drivers 24 constitute a scan wiring drive unit for outputting a below-mentioned scan signal.

The source wirings S and the gate wirings G are arrayed in a matrix in at least the effective display area A, and in each block of the matrix is respectively formed one of the plurality of pixels P. More specifically, the source wirings S include source wiring main portions S1b, S2b, S3b, --- and so on parallelly arrayed in the vertical direction of the liquid crystal panel 2, and connection wiring portions S1a, S2a, S3a,and so on linking these source wiring main portions S1b, S2b, S3b, --- and so on to the source drivers 23 so as to be as close as possible, as illustrated in FIG. 2. Similarly, the gate wirings G include gate wiring main portions G1b, G2b, --- and so on parallelly arrayed in the horizontal direction of the liquid crystal panel 2, and connection wiring portions G1a, G2a, --- and so on linking these gate wiring main portions G1b, G2b,and so on to the gate drivers 24 so as to be as close as possible.

The plurality of pixels P include red, green and blue pixels. These red, green and blue pixels are sequentially arranged in this order, for example, parallel to the gate wiring main portions G1b, G2b, --- and so on each of the gate wirings G.

A gate of a switching element 25 provided in each pixel P is connected to the gate wiring main portions G1b, G2b, --- and so on. On the other hand, a source of the switching element 25 is connected to the source wiring main portions S1b, S2b, S3b,and so on. A pixel electrode 26 provided in each pixel P is connected to a drain of the switching element 25. Also, each pixel P is configured such that a common electrode 27 opposes the pixel electrode 26 in a state where the liquid crystal layer 4 (FIG. 1) provided in the liquid crystal panel 2 is sandwiched therebetween. The gate drivers 24 sequentially output a scan signal for setting the gate of the corresponding switching element 25 to on to the gate wirings G1 to GN, based on the instruction signal from the image processing unit 22a. On the other hand, the source drivers 23 output a voltage signal (gradation voltage) according to the luminance (gradation) of the display image to the corresponding source wirings S1 to SM, based on the instruction signal from the image processing unit 22a.

Also, a redundant wiring Y serving as a backup wiring for the source wirings S is connected to each of the plurality of source drivers 23-1 to 23-9. This redundant wiring Y is provided on the active matrix substrate 5 (FIG. 1), outside the effective display area A. Also, when a disconnection, for example, occurs on one of the source wirings S, the redundant wiring Y is connected to an end of that source wiring S on the opposite side to the source driver 23, and outputs the source signal of the source driver 23 from the opposite end of the source wiring S to the disconnection point to charge the voltage of the source signal (discussed in detail later).

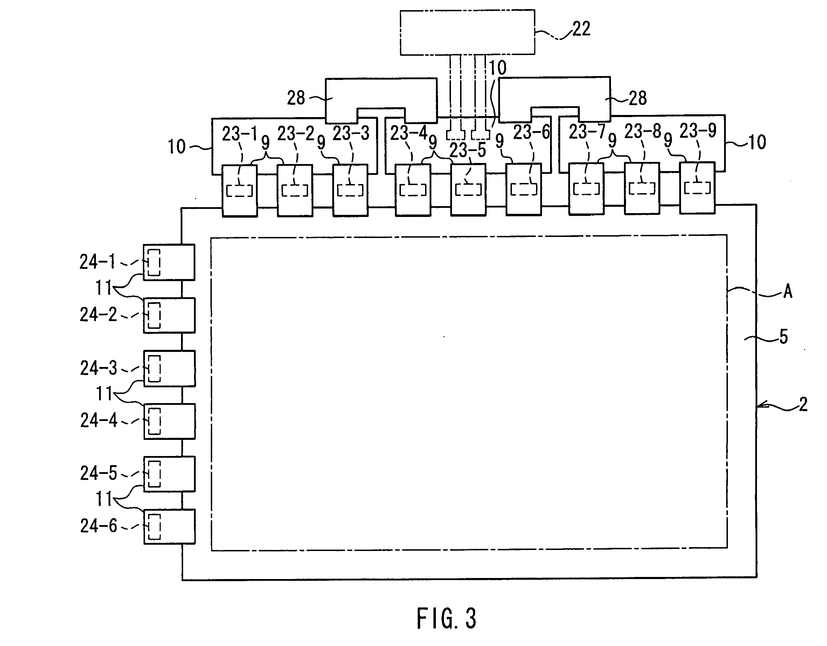

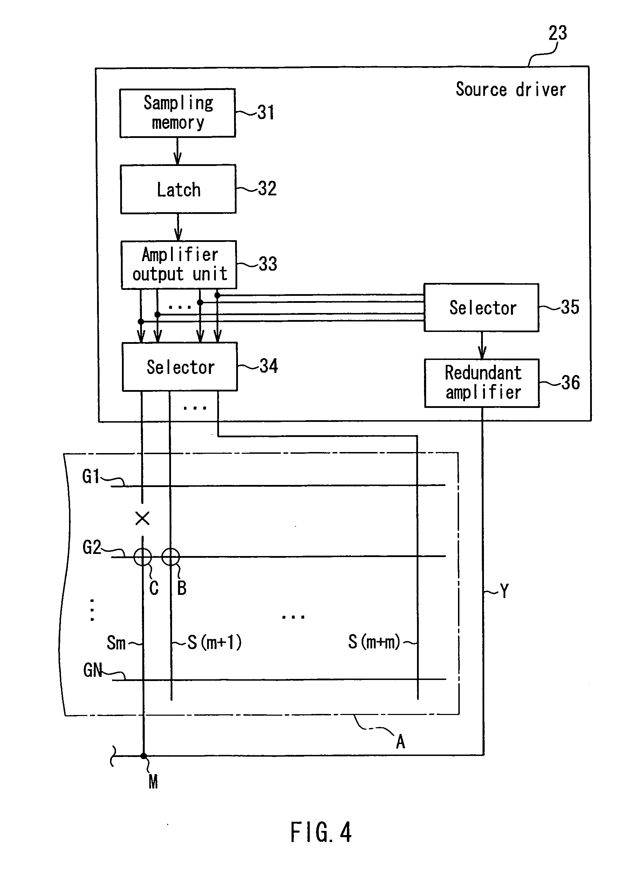

Here, the source drivers 23 of the present embodiment will be described in detail with reference also to FIGS. 3 and 4.

FIG. 3 is a plan view showing the printed circuit boards and the flexible printed circuit boards shown in FIG. 1, and FIG. 4 illustrates a main configuration of the source drivers.

First, the connection states of the active matrix substrate 5 with the source drivers 23 and the gate drivers 24 will be described in detail with reference to FIG. 3.

As shown in FIG. 3, with the liquid crystal panel 2, the nine source drivers 23-1 to 23-9 are respectively mounted on nine flexible printed circuit boards (SOF) 9. One end of each flexible printed circuit board 9 is connected outside the effective display area A to a source wiring S on the active matrix substrate 5. Also, the source drivers 23-1 to 23-9 each have connected thereto the same number of source wirings S, that is, (M/9) source wirings S.

The other end of the flexible printed circuit board 9 is connected to a printed circuit board 10. Specifically, as illustrated in FIG. 3, with the liquid crystal panel 2, three printed circuit boards 10 are provided, and three flexible printed circuit boards 9 are connected to each printed circuit board 10. A flexible printed circuit board 28 is provided between two adjacent printed circuit boards 10, and these two printed circuit boards 10 are connected to each other. That is, two flexible printed circuit boards 28 are provided for the three printed circuit boards 10, and the nine source drivers 23-1 to 23-9 are sequentially connected by interposing these printed circuit boards 10 and flexible printed circuit boards 28, so as to function as a single source driver. Also, the panel control unit 22 is connected to the middle printed circuit board 10, and an instruction signal according to information to be displayed on the display unit of the liquid crystal panel 2 is input to the source drivers 23-1 to 23-9 from the image processing unit 22a inside the panel control unit 22. The source drivers 23-1 to 23-9 each then output the above-mentioned voltage signal to a corresponding source wiring S.

Also, with the liquid crystal panel 2, the six source drivers 24-1 to 24-6 are respectively mounted on six flexible printed circuit boards (SOF) 11. One end of each flexible printed circuit board 11 is connected outside the effective display area A to a gate wiring G on the active matrix substrate 5. The gate drivers 24-1 to 24-6 each have connected thereto the same number of gate wirings G, that is, (N/6) gate wirings. Further, the gate drivers 24-1 to 24-6 are connected to the panel control unit 22 via wirings (not shown) provided on the corresponding flexible printed circuit board 11 and the active matrix substrate 5. The gate drivers 24-1 to 24-6 each input the instruction signal from the image processing unit 22a, and output the above scan signal to a corresponding gate wiring G.

Also, with the liquid crystal panel 2, as a result of the flexible printed circuit boards 9 and 11 being bent relative to the active matrix substrate 5, these flexible printed circuit boards 9 and 11 and the printed circuit boards 10 are disposed inside the bezel 14, as shown in FIG. 1.

Next, the configuration of the source drivers 23 of the present embodiment will be described in detail, with reference to FIG. 4.

As illustrated in FIG. 4, the source drivers 23 of the present embodiment each have provided therein a sampling memory 31 serving as a storage unit, and a latch 32, an amplifier output unit 33 and a selector 34 that are sequentially connected to this sampling memory 31, and a source signal is output to source wirings Sm, S(m+ 1), - ---, S(m+m) connected to the selector 34.

A source signal (data signal) is input to the sampling memory 31 from outside, and the input source signal (data signal) is appropriately stored, based on the instruction signal from the panel control unit 22. The latch 32 collectively latches and stores the source signal stored in the sampling memory 31, based on the instruction signal from the panel control unit 22.

One end of each of the plurality of source wirings Sm to S(m+m) is connected to the amplifier output unit 33 via the selector 34, and a source signal according to information to be displayed on the liquid crystal panel (display unit) 2 is output. That is, the amplifier output unit 33 is configured to input a source signal from the latch 32 based on the instruction signal from the panel control unit 22, and output the source signal to a corresponding source wiring S via the selector 34.

Also, a selector 35 connected between the amplifier output unit 33 and the selector 34 and a redundant amplifier 36 connected to this selector 35 are provided in the source drivers 23 of the present embodiment. One end of the redundant wiring Y is connected to this redundant amplifier 36, and the redundant amplifier 36 is configured to be able to output a source signal according to information to be displayed on the liquid crystal panel 2 to the redundant wiring Y, based on the instruction signal from the panel control unit 22. Also, the selector 35 is configured to select only the source signal for the source wiring S to which the redundant wiring Y is connected, among the plurality of source signals respectively corresponding (output) to the plurality of source wirings Sm to S(m+m) output from the amplifier output unit 33 to the selector 34, and to output the selected source signal from the amplifier output unit 33 to the redundant amplifier 36.

Also, the redundant wiring Y, as described above, is wired outside the effective display area A, and is configured to be used as a backup wiring for a source wiring S that suffers a disconnection. That is, with the liquid crystal display apparatus 1 of the present embodiment, when it is discriminated in a manufacturing step of the liquid crystal panel 2 that a disconnection has occurred on the source wiring Sm at a disconnection point X, for example, the source wiring Sm is connected to the redundant wiring Y by being welded thereto at a connection point M outside the effective display area A by a laser, for example. Thereby, with the source drivers 23 of the present embodiment, as will be described in detail later, even when a disconnection occurs on a source wiring S, a source signal is output to the source wiring S and pixels P connected thereto by interposing the redundant wiring Y, and those pixels P can be charged to the voltage of the source signal.

Also, the redundant amplifier 36 is configured to output a corresponding source signal to the redundant wiring Y and the source wiring Sm to which the redundant wiring Y is connected at a timing earlier than the amplifier output unit 33 by a prescribed amount of time. The value of this prescribed amount of time, in the case where, for example, a disconnection has occurred on the source wiring Sm at the disconnection point X and the redundant wiring Y is connected to the source wiring Sm, is determined using a resistance value of wiring from the amplifier output unit 33 to the disconnection point X and a resistance value of wiring from the Redundant amplifier 36 to the disconnection point X via the redundant wiring Y With the source drivers 23 of the present embodiment, the redundant amplifier 36 is configured to input from the selector 35 a source signal to be output to the source wiring Sm, and to output the source signal from the selector 35 to the redundant wiring Y at an earlier timing than the timing at which the amplifier output unit 33 outputs the source signal to the source wiring Sm by a prescribed amount of time.

Note that information relating to the source wiring Sm to which the redundant wiring Y is connected after suffering a disconnection (includes position information, for specifying the source wiring Sm), and data relating to the prescribed amount of time determined as described above is appropriately stored and held in a memory (not shown) provided in the panel control unit 22.

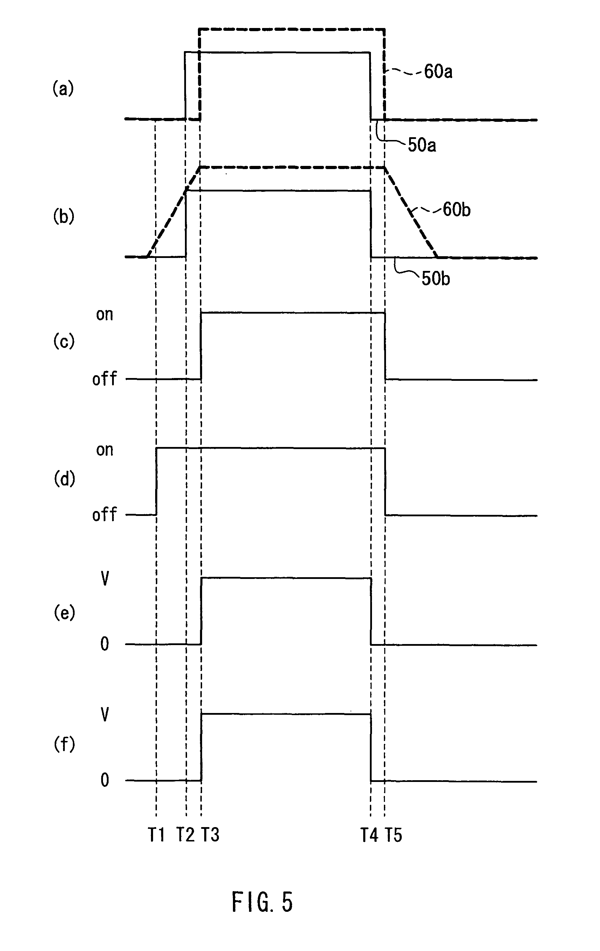

Here, operations of the liquid crystal display apparatus 1 of the present embodiment configured as described above will be described in detail, with reference also to FIG. 5. Note that in the following description, operations of the source drivers 23 in the case where a disconnection has occurred on the source wiring Sm shown in FIG. 4 and the source wiring Sm is connected to the redundant wiring Y will be described.

FIG. 5 illustrates example operations of the source drivers.

At a point T1, the redundant amplifier 36 (FIG. 4) is changed to an on state and output of a source signal to the redundant wiring Y and the source wiring Sm is started, as shown in FIG. 5(d). Charging by the source signal is thereby started in the pixel P provided at an intersection C (FIG. 4) of the source wiring Sm and the gate wiring G2, as shown by a dotted line 60b in FIG. 5(b). Also, since the source signal is supplied to this pixel P via the redundant wiring Y, the rise is slow, as shown by the dotted line 60b.

Subsequently, a scan signal for setting the gate of the switching element 25 (FIG. 2) to an on state is input the gate wiring G2 at a point T2, as respectively shown by the solid line 50a in FIG. 5(a) and the solid line 50b in FIG. 5(b). Then, at a point T3 after a prescribed amount of time has elapsed from the point T1, the amplifier output unit 33 (FIG. 4) is changed to an on state and output of a source signal to the source wiring S(m+1) (FIG. 4) is started, as shown in FIG. 5(c). Charging by the source signal is thereby started in the pixel P provided at an intersection B (FIG. 4) of the source wiring S(m+1) and the gate wiring G2, as shown by a dotted line 60a in FIG. 5(a).

Next, at a point T4, a scan signal for setting the gate of the switching element 25 to an off state is input to the gate wiring G2, as respectively shown the solid line 50a in FIG. 5(a) and the solid line 50b in FIG. 5(b), after which the amplifier output unit 33 and the redundant amplifier 36 are changed to an off state and output of the source signal is stopped, as respectively shown in FIG. 5(c) and FIG. 5(d).

As a result of the above operations, the pixel P provided at the intersection B and the pixel P provided at the intersection C are charged to the same voltage by the source signal between the point T3 and the point T4, as shown in FIG. 5(e) and FIG. 5(f).

With the liquid crystal display apparatus 1 of the present embodiment configured as described above, a redundant amplifier 36 connected to one end of a redundant wiring Y and capable of outputting the source signal (data signal) is provided, so that even when a disconnection occurs on a source wiring (data wiring) S, undercharging on the source wiring S can be prevented, without providing two redundant wirings. Also, with the liquid crystal display apparatus 1 of the present embodiment, simply by connecting at one place the redundant wiring Y to a source wiring S that has suffered a disconnection, undercharging on that source wiring S can be prevented

Further, with the liquid crystal display apparatus 1 of the present embodiment, the redundant amplifier 36 outputs a corresponding source signal to the redundant wiring Y and the source wiring S to which the redundant wiring Y is connected at an earlier timing than the amplifier output unit 33 by a prescribed amount of time, so that at the end of the signal supply period of this source signal, the section from the amplifier output unit 33 to the disconnection point of the source wiring S and the section from the redundant amplifier 36 to the disconnection point on the source wiring S via the redundant wiring Y can be charged to substantially the same voltage. Accordingly, in the present embodiment, a liquid crystal display apparatus 1 that, unlike the above conventional example, is structurally simple and able to easily prevent a drop in display quality even when a disconnection occurs on a source wiring S can be configured.

Also, with the liquid crystal display apparatus 1 of the present embodiment, the value of the prescribed amount of time is determined using the resistance value of wiring from the amplifier output unit 33 to the disconnection point on the source wiring S and the resistance value of wiring from the redundant amplifier 36 to the disconnection point on the source wiring S via the redundant wiring Y Thereby, with the liquid crystal display apparatus 1 of the present embodiment, the section of the source wiring S to which the redundant wiring Y is connected from the amplifier output unit 33 to the disconnection point and the section from the redundant amplifier 36 to the disconnection point on the source wiring S via the redundant wiring Y can be reliably charged to substantially the same voltage at the end of the signal supply period of the source signal. As a result, with the liquid crystal display apparatus 1 of the present embodiment, even when a disconnection occurs on a source wiring S, a drop in display quality can be reliably prevented by avoiding undercharging on that source wiring.

Also, with the liquid crystal display apparatus 1 of the present embodiment, the pixel P connected to the source wiring S(m+1) that has not suffered a disconnection and the pixel P connected to the source wiring Sm that has suffered a disconnection can be charged to substantially the same voltage, as shown in FIG. 5(e) and FIG. 5(f). Accordingly, in the present embodiment, a liquid crystal display apparatus 1 that is able to suitably drive the liquid crystal layer 4 and in which a drop in display quality is prevented even when a disconnection occurs on a source wiring S can be easily configured.

### [Second Embodiment]

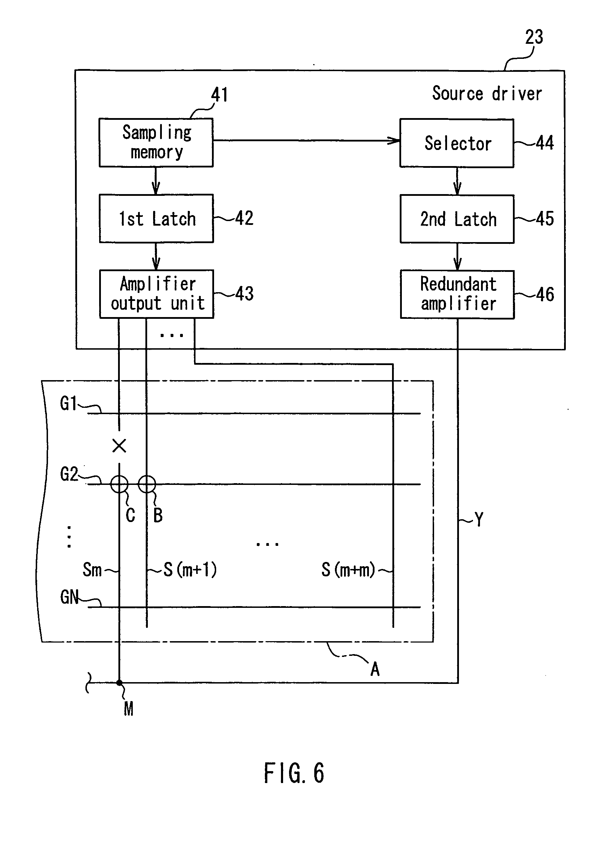

FIG. 6 illustrates a main configuration of a source driver in a liquid crystal display apparatus according to a second embodiment of the present invention. In FIG. 6, the present embodiment differs from the first embodiment in that a selector for selectively outputting on the redundant amplifier side only a corresponding data signal for a source wiring to which the redundant wiring is connected is provided between the sampling memory and the redundant amplifier. Note that elements that are in common with the first embodiment are given the same reference numerals, and redundant description thereof will be omitted.

That is, as shown in FIG. 6, in the present embodiment, the source drivers (data wiring drive unit) 23 are each provided with a sampling memory 41 serving as a storage unit, and a first latch 42 and an amplifier output unit 43 that are sequentially connected to this sampling memory 41, and a source signal is output to source wirings Sm, S(m+1), --- , S(m+m) connected to the amplifier output unit 43.

A source signal (data signal) is input to the sampling memory 41 from outside, and the input source signal (data signal) is appropriately stored, based on an instruction signal from a panel control unit 22. The first latch 42 collectively latches and stores the source signal stored in the sampling memory 41, based on the instruction signal from the panel control unit 22.

One end of each of the plurality of source wirings Sm to S(m+m) is connected to the amplifier output unit 43, and a source signal according to information to be displayed on a liquid crystal panel (display unit) 2 is output. That is, the amplifier output unit 43 is configured to input a source signal from the first latch 42 based on the instruction signal from the panel control unit 22, and output the source signal to a corresponding source wiring S.

Also, a selector 44 serving as a selection unit connected to the sampling memory 41 and a second latch 45 and a redundant amplifier 46 sequentially connected to this selector 44 are provided in the source drivers 23 of the present embodiment. One end of the redundant wiring Y is connected to this redundant amplifier 46, and the redundant amplifier 46 is configured to be able to output a source signal according to information to be displayed on the liquid crystal panel 2 to the redundant wiring Y, based on the instruction signal from the panel control unit 22. Also, the selector 44 is configured to selectively output to the second latch 45 only a corresponding source signal for the source wiring S to which the redundant wiring Y is connected, based on the instruction signal from the panel control unit 22. The second latch 45 is configured to latch and store the source signal from the selector 44, and to output the stored source signal to the redundant amplifier 46, based on the instruction signal from the panel control unit 22.

The redundant amplifier 46 is configured to output a corresponding source signal to the redundant wiring Y and the source wiring Sm to which the redundant wiring Y is connected at a timing earlier than the amplifier output unit 43 by a prescribed amount of time, similarly to the redundant amplifier of the first embodiment. With the source drivers 23 of the present embodiment, the redundant amplifier 46 is configured to input from the second latch 45 a source signal to be output to the source wiring Sm, and to output the source signal from the second latch 45 to the redundant wiring Y at an earlier timing than the timing at which the amplifier output unit 43 outputs the source signal to the source wiring Sm by a prescribed amount of time.

The above configuration enables the present embodiment to achieve substantially similar functions and effects to the first embodiment. In the present embodiment, a selector (selection unit) 44 for selectively outputting on the redundant amplifier 46 side only a corresponding source signal (data signal) for a source wiring (data wiring) S to which to the redundant wiring Y is connected is provided between the sampling memory (storage unit) 41 and the redundant amplifier 46. With the source drivers (data wiring drive unit) 23 of the present embodiment, the circuit size of the source drivers 23 can thereby be reduced in comparison with the source drivers of the first embodiment. That is, with the source drivers 23 of the present embodiment, the number of wirings connected to the selector 35 does not need to be the same as the number of source wirings Sm to S(m+m) provided between the amplifier output unit 33 and the selector 34, as was the case with the source drivers of the first embodiment shown in FIG. 4.

The foregoing embodiments are to be considered in all respects as illustrative and not restrictive. The scope of the invention is indicated by the claims, and all modifications that come within the meaning and range of equivalency of the claims are intended to be embraced therein.

For example, in the above description, the case where the present invention is applied to a transmissive liquid crystal display apparatus was described, but the display apparatus of the present invention is not limited thereto, and the present invention can be applied to various types of display apparatus, such as a semi-transmissive or reflective liquid crystal display apparatus or an organic EL (Electronic Luminance) element, an inorganic EL element or a field emission display

In the above description, the case where a redundant amplifier was integrally provided in the source drivers (data wiring drive unit) was described, but the present invention is not limited thereto, and the data wiring drive unit and the redundant amplifiers may be provided separately.

The case where the redundant amplifier is integrally provided in the source drivers (data wiring drive unit), as in the above embodiments, is preferable, however, from the point of view of being able to easily achieve a compact circuit structure in the display apparatus in comparison with the case where the data wiring drive unit and the redundant amplifiers are provided separately.

In the above description, the case where the source drivers (data wiring drive unit) are mounted on a flexible printed circuit board (SOF) was described, but the data wiring drive unit of the present invention is not limited thereto. Specifically, a data wiring drive unit that is COG (Chip On Glass) mounted on the active matrix substrate of the liquid crystal panel, for example, can also be used.

In the above description, the case where the redundant wiring is provided outside an effective display area set in the display unit was described, but the redundant wiring of the present invention may be provided inside the effective display area, as long as the redundant wiring is provided as a backup wiring for the data wirings.

The case where the redundant wiring is provided outside the effective display area, as in the above embodiments, is preferable, however, from the point of view of easily improving the display quality in the effective display area.

### Industrial Applicability

The present invention is industrially applicable as a structurally simple display apparatus that is able to easily prevent a drop in display quality even when a disconnection occurs on a data wiring.

### List of Reference Numerals

1: Liquid crystal display apparatus (display apparatus)
2: Liquid crystal panel (display unit)
4: Liquid crystal layer
5 : Active matrix substrate (pair of transparent substrates)
6: Color filter substrate (pair of transparent substrates)
23, 23-1 to 23-9: Source drivers (data wiring drive unit)
31, 41: Sampling memory (storage unit)
33,43: Amplifier output unit
36, 46: Redundant amplifier
44: Selector (selection unit)
S, S1 to SM, Sm to S(m+m): source wirings (data wirings)
Y: Redundant wiring
A: Effective display area
X: Disconnection point

## Claims

1. A display apparatus provided with a display unit for displaying information, comprising:
a plurality of data wirings;
a data wiring drive unit connected to one end of each of the plurality of data wirings, and having an amplifier output unit that outputs to each of the plurality of data wirings a data signal according to information to be displayed on the display unit;
a redundant wiring provided as a backup wiring for the data wirings, and
a redundant amplifier connected to one end of the redundant wiring and capable of outputting to the redundant wiring a data signal according to information to be displayed on the display unit,
wherein the redundant amplifier outputs to the redundant wiring and a data wiring to which to the redundant wiring is connected a corresponding data signal at a timing earlier than the amplifier output unit by a prescribed amount of time.

2. The display apparatus according to claim 1, wherein the redundant amplifier is integrally provided in the data wiring drive unit.

3. The display apparatus according to claim 2, wherein the data wiring drive unit includes:
a storage unit that stores a data signal input from outrider and
a selection unit that is provided between the storage unit and the redundant amplifier, and selectively outputs on the redundant amplifier side only the corresponding data signal for the data wiring to which to the redundant wiring is connected.

4. The display apparatus according to any one of claims 1 to 3, wherein a value of the prescribed amount of time, in a case where a disconnection occurs on a data wiring and the redundant wiring is connected to the data wiring, is determined using a resistance value of wiring from the amplifier output unit to a disconnection point of the data wiring and a resistance value of wiring from the redundant amplifier to the disconnection point of the data wiring via the redundant wiring.

5. The display apparatus according to any one of claims 1 to 4,
wherein an effective display area is set in the display unit,
the plurality of data wirings are provided at least inside the effective display area, and
the redundant wiring is provided outside the effective display area.

6. The display apparatus according to any one of claims 1 to 5, wherein a liquid crystal panel provided with a pair of transparent substrates and a liquid crystal layer that is sandwiched by the pair of the transparent substrates is used for the display unit.
